**Europäisches Patentamt**

**European Patent Office**

**Office européen des brevets**

(19)

(11) Numéro de publication: **0 045 680**

**A1**

(12)

# DEMANDE DE BREVET EUROPEEN

(21) Numéro de dépôt: **81401183.9**

(22) Date de dépôt: **24.07.81**

(51) Int. Cl.$^3$: **H 04 L 25/49**

(30) Priorité: **29.07.80 FR 8016708**

(43) Date de publication de la demande:
**10.02.82 Bulletin 82/6**

(84) Etats contractants désignés:
**DE GB IT NL**

(71) Demandeur: **LIGNES TELEGRAPHIQUES ET TELEPHONIQUES Société anonyme**
**1 Rue Charles Bourseul**
**F-78702 Conflans-Ste Honorine(FR)**

(72) Inventeur: **Gourdon, Claude**
**THOMSON-CSF SCPI - 173, bld Haussmann**
**F-75360 Paris Cedex 08(FR)**

(72) Inventeur: **Thivend, Jean**
**THOMSON-CSF SCPI - 173, bld Haussmann**
**F-75360 Paris Cedex 08(FR)**

(74) Mandataire: **Benoit, Monique et al,**
**"THOMSON-CSF" - SCPI 173, bld Haussmann**
**F-75360 Paris Cedex 08(FR)**

(54) **Procédé de transcodage d'informations et système de transmission utilisant un tel procédé.**

(57) L'invention a pour objet un procédé et un système permettant la transmission d'une information supplémentaire, appelée voie d'ordre, se superposant à l'information à transmettre, par une altération de la loi de codage.

Le procédé comporte principalement les étapes suivantes:

- la détection d'au moins une valeur possible de l'information à transmettre $(B_n)$, pour laquelle la loi de codage est altérée en fonction de l'information de voie d'ordre $(V_E)$;

- la transformation du premier codage en un deuxième codage par le choix d'un parmi plusieurs alphabets susceptibles d'assurer une telle transformation, ce choix étant effectué en fonction de la valeur de la somme numérique courante $(S_{n-1})$, selon une loi de codage telle que la valeur de cette somme numérique se trouve minimisée;

- l'émission à une extrémité de la voie de transmission de l'information $(T_n)$ exprimée selon le deuxième codage et telle qu'altérée par la voie d'ordre;

- la transformation de l'information reçue à l'autre extrémité de la voie de transmission en une information exprimée selon le premier codage $(B_n)$;

- la détection de la voie d'ordre $(V_E)$ par détection de l'altération de la loi de codage.

./...

FIG_1

1

## PROCEDE DE TRANSCODAGE D'INFORMATIONS ET SYSTEME DE TRANSMISSION UTILISANT UN TEL PROCEDE

La présente invention se rapporte au domaine du transcodage d'informations et elle a plus particulièrement pour objet un procédé de transformation d'un flux d'informations, binaires par exemple, en un flux d'impulsions mieux adapté aux milieux de transmission usuels (câble à conducteur métallique, câble à fibres optiques, etc.) ; ce flux est le plus souvent une suite d'impulsions ternaires, c'est-à-dire à trois niveaux.

L'invention a également pour objet un système de transmission permettant la mise en oeuvre de ce procédé.

Le problème posé par un tel transcodage a fait l'objet de nombreuses études, parmi lesquelles on peut citer à titre d'exemple l'article de J. VALIN, paru dans la revue technique THOMSON-CSF, (volume II n° 2 juin 1979 page 359) ; il en ressort notamment que les caractéristiques recherchées pour un code sont : la minimisation de la bande passante normalement nécessaire pour transmettre correctement le signal ; la suppression de la composante continue, de façon à permettre la simplification de certains éléments du système de transmission ; la possibilité de disposer d'un processus auto-synchronisant, permettant d'éviter l'adjonction d'un canal particulier pour la transmission de signaux de synchronisation, et la détection intrinsèque des erreurs de transmission. On connaît en particulier un certain nombre de codes complexes, décrits notamment dans l'article précité, tels que les codes ternaires, quaternaires, etc., pour lesquels le nombre de combinaisons possibles est supérieur à celui du code, par exemple binaire, de départ. Cette redondance permet de définir plusieurs alphabets, c'est-à-dire qu'à chaque valeur possible du code de départ il correspond plusieurs valeurs du code complexe.

On appelle loi de codage la loi permettant de choisir pour chaque valeur du code de départ celui des alphabets qui sera utilisé, en fonction d'au moins un critère qui tient compte de l'ensemble du message déjà transmis : ce critère est la somme numérique courante, dont on rappelle qu'elle est la somme des valeurs des symboles du code entre l'instant choisi comme origine de l'émission et un instant $t$ quelconque. Or, il est connu que le bornage de la somme numérique permet notamment d'éliminer la composante continue du signal transmis : la loi de codage règle donc en général le passage d'un alphabet à l'autre en vue de diminuer la somme numérique courante.

La présente invention a pour objet la transmission d'informations supplémentaires, constituant ce qui est appelé dans la suite une voie d'ordre, se superposant à l'information à transmettre, et ce par une altération de la loi du codage tout en conservant globalement les avantages de cette loi sur le plan de la bande passante, de la composante continue, etc.

Plus précisément, le procédé selon l'invention a pour objet le transcodage d'une information à transmettre sur une voie de transmission, exprimée selon un premier code, et comporte les opérations suivantes :

- la transformation du premier codage en un second codage par le choix d'un parmi plusieurs alphabets susceptibles d'assurer une telle transformation, ce choix étant effectué en fonction de la valeur de la somme numérique courante, selon une loi de codage telle que la valeur de cette somme numérique se trouve minimisée ;

- la détection d'au moins une valeur possible de l'information à transmettre, pour laquelle la loi de codage est altérée en fonction de l'information de voie d'ordre ;

- l'émission à une extrémité de la voie de transmission de l'information exprimée selon le deuxième codage et telle qu'altérée par la voie d'ordre ;

- la transformation de l'information reçue à l'autre extrémité de la voie de transmission en une information exprimée selon le premier codage ;

- la détection de la voie d'ordre par détection des altérations de la loi de codage.

L'invention a également pour objet un système de transmission d'informations permettant la mise en œuvre du procédé ci-dessus et comporte à cet effet un module d'émission et un module de réception, placés de part et d'autre d'une ligne de transmission.

Le module d'émission comporte principalement :

- des moyens de détection d'au moins une valeur possible des informations à transmettre, exprimée selon le premier codage, pour laquelle la loi du codage est modifiée, recevant la voie d'ordre et fournissant un signal de modification de cette loi ;

- des moyens d'élaboration de la somme numérique courante ;

- des moyens de transcodage recevant l'information à transmettre, la somme numérique et le signal de modification, et fournissant une information à émettre, exprimée selon le deuxième codage.

Le module de réception comporte principalement :

- des moyens de transcodage, recevant l'information transmise et la transformant en une information exprimée selon le premier codage ;

- des moyens d'élaboration de la somme numérique courante, recevant notamment l'information transmise ;

- des moyens de détection des altérations de la loi de codage, recevant l'information transmise et la somme numérique et fournissant l'information de voie d'ordre.

D'autres objets, caractéristiques et résultats de l'invention ressortiront de la description suivante, donnée à titre d'exemple non limitatif et illustrée par les dessins annexés, qui représentent :

- la figure 1, un premier mode de réalisation du module d'émission utilisé dans le système de transmission selon l'invention ;

- la figure 2, un deuxième mode de réalisation de ce module d'émission ;

- la figure 3, un mode de réalisation du module de réception utilisé dans le système de transmission selon l'invention.

Sur ces différentes figures, les mêmes références se rapportent aux mêmes éléments.

Ces différentes figures représentent des modes de réalisation

4

d'éléments du système selon l'invention dans le cas d'un transcodage particulier connu sous le nom de 4B/3T, dans lequel l'information à transmettre est exprimée sous forme binaire, en mots de quatre bits, et l'information transcodée, émise sur la voie de transmission, est exprimée sous forme de mots de trois caractères ternaires, c'est-à-dire des caractères pouvant prendre une parmi trois valeurs, représentées habituellement par les symboles : " 0 ", " + " et " - ".

Le tableau ci-après donne un exemple de codage 4B/3T à quatre alphabets, c'est-à-dire que pour chaque mot binaire de quatre bits, la correspondance ternaire se fait en prenant un mot ternaire de trois caractères dans l'une des quatre colonnes possibles. Le choix entre ces colonnes, donc entre ces quatre alphabets, se fait selon la valeur de la somme numérique courante, c'est-à-dire la somme numérique résultant de tous les mots déjà transmis, cette somme étant faite dans ce cas mot après mot. En se reportant au tableau, on a représenté dans la première colonne un mot binaire $B_n$ occupant un rang $\underline{n}$ dans un message à transmettre donné et les colonnes suivantes représentent un mot ternaire correspondant $T_n$, exprimé selon l'un des quatre alphabets et choisi selon la loi de codage retenue, en fonction de la valeur de la somme numérique $S_{n-1}$ des n-1 mots précédant le mot $T_n$.

| MOT BINAIRE $B_n$ | MOT TERNAIRE $T_n$ | | | |
|---|---|---|---|---|
| | $S_{n-1} = -2$ | $S_{n-1} = -1$ | $S_{n-1} = 0$ | $S_{n-1} = +1$ |
| 0000 | + - + | + - + | + - + | - - - |
| 0001 | + + + | - + - | - + - | - + - |
| 0010 | 0 + + | 0 + + | 0 - - | 0 - - |
| 0011 | + 0 + | + 0 + | - 0 - | - 0 - |
| 0100 | - + + | - + + | - + + | - - 0 |
| 0101 | + + 0 | + - - | + - - | + - - |
| 0110 | + + - | + + - | - - + | - - + |
| 0111 | 0 0 + | 0 0 + | 0 0 - | 0 0 - |
| 1000 | 0 + 0 | 0 + 0 | 0 - 0 | 0 - 0 |
| 1001 | + 0 0 | + 0 0 | - 0 0 | - 0 0 |
| 1010 | + 0 - | + 0 - | + 0 - | + 0 - |
| 1011 | + - 0 | + - 0 | + - 0 | + - 0 |
| 1100 | - 0 + | - 0 + | - 0 + | - 0 + |
| 1101 | - + 0 | - + 0 | - + 0 | - + 0 |
| 1110 | 0 + - | 0 + - | 0 + - | 0 + - |
| 1111 | 0 - + | 0 - + | 0 - + | 0 - + |

Chaque caractère ternaire peut être bien entendu représenté en binaire à l'aide de deux bits, avec par exemple la convention suivante :

- un "+" ternaire est représenté en binaire par 10 ;

- un "0" ternaire est représenté en binaire par 00 ;

- un "-" ternaire est représenté en binaire par 01.

Il est ainsi possible de représenter un mot ternaire de trois caractères en binaire par 6 bits.

Selon l'invention, la loi de codage représentée par le tableau ci-dessus est modifiée afin de permettre la transmission d'une information supplémentaire, dite voie d'ordre, de la façon sui- information supplémentaire, dite voie d'ordre, de la façon suivante : au moins un des mots $B_n$ possibles voit sa loi de codage altérée au moins dans certains cas, par exemple selon la valeur de la somme numérique. On obtient, à titre d'exemple, le tableau suivant lorsqu'on décide de modifier la loi de codage pour un seul mot $B_n$, par exemple 1000.

| $B_n$ | voie d'ordre | $T_n$ | | | |
|---|---|---|---|---|---|
| | | $S_{n-1} = -2$ | $S_{n-1} = -1$ | $S_{n-1} = 0$ | $S_{n-1} = +1$ |
| 1000 | 0 ——— 1 | 0 + 0 | 0 + 0 ——— 0 - 0 | 0 - 0 ——— 0 + 0 | 0 - 0 |

.Il apparaît sur ce tableau, lorsqu'on le compare au précédent, que lorsque l'information de voie d'ordre est égale à 0, la loi de codage n'est pas altérée, cette altération ne se produisant que pour une voie d'ordre égale à 1 et que pour les valeurs de somme numérique égale à -1 ou 0, cela afin de réduire l'excursion de cette dernière conformément au critère mentionné plus haut.

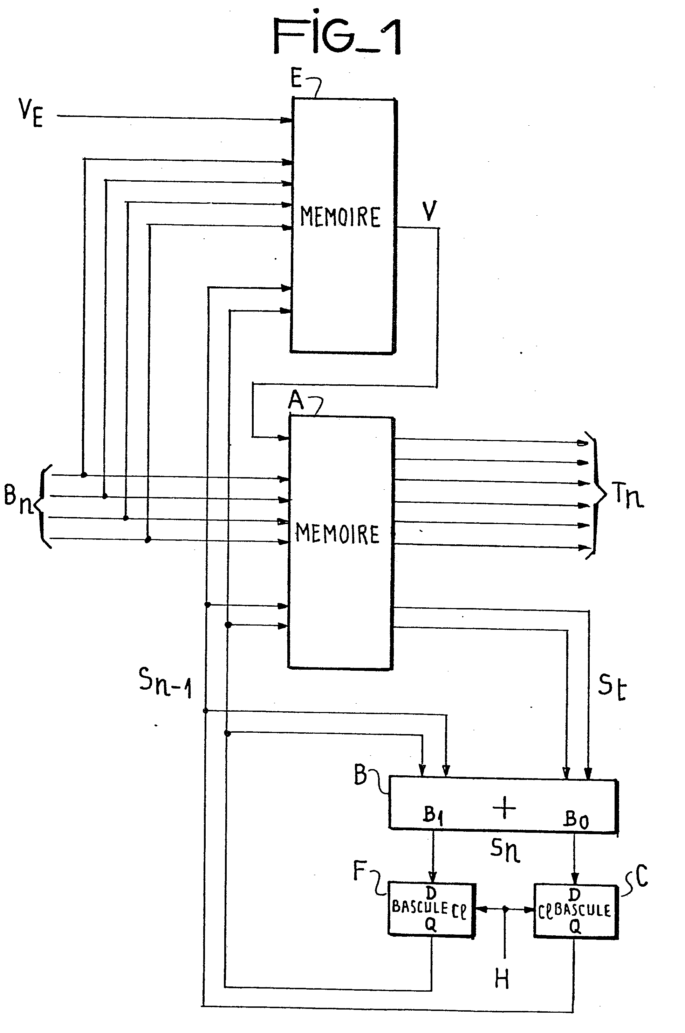

La figure 1 représente un premier mode de réalisation du module d'émission du système de transmission selon l'invention, adapté au code décrit ci-dessus.

Le module d'émission comporte un premier ensemble A, appelé moyens de transcodage, qui est constitué par un circuit logique câblé ou par une mémoire, par exemple du type ROM, qui reçoit le mot binaire $B_n$ à transmettre, sur 4 bits en parallèle dans l'exemple précédent, ainsi que la valeur $S_{n-1}$ de la somme numérique des n-1 mots précédents du message considéré, exprimée sur deux bits en parallèle ; le bloc A reçoit également une information V, sur un bit, qui représente un ordre éventuel de modification de la loi de codage.

Le bloc A fournit en fonction de ces trois éléments le mot ternaire $T_n$, en général sous sa représentation binaire par exemple selon la convention indiquée plus haut, ainsi que la somme numérique de ce mot ternaire $T_n$, noté $S_t$.

Le module d'émission de la figure 1 comporte encore des moyens de détection E, recevant le mot binaire $B_n$ également sur quatre bits, l'information de voie d'ordre $V_E$ sur un bit, ainsi que l'indication de la somme numérique $S_{n-1}$ sur deux bits. Ce bloc E fournit, en fonction du deuxième tableau, l'information V précédente, c'est-à-dire qu'il a pour fonction de reconnaître le ou les mots susceptibles de subir une modification de la loi de codage en fonction de la voie d'ordre, de reconnaître de la même manière la valeur de la somme numérique $S_{n-1}$ et, lorsque les valeurs de $B_n$ et de $S_{n-1}$ sont convenables, de lancer l'ordre V de modification de la loi de codage en fonction de la valeur (0 ou 1) de l'information de voie d'ordre d'entrée $V_E$. Le bloc E est également constitué par un circuit logique câblé ou une mémoire de type ROM par exemple.

Le module de la figure 1 comporte encore des moyens d'élaboration de la somme numérique $S_n$, nouvelle valeur de cette somme après l'émission du mot ternaire $T_n$. Dans ce mode de réalisation, ces moyens sont constitués par un additionneur B qui reçoit, d'une part, la valeur $S_{n-1}$ et, d'autre part, la valeur $S_t$ et qui fournit sur deux sorties $B_0$ et $B_1$ la valeur de $S_n$ ; ces deux sorties alimentent des bascules de type D, repérées C et F, qui permettent d'avoir disponible la valeur de $S_n$ pour le mot binaire suivant $B_{n+1}$. Les bascules C et F comportent classiquement une entrée de synchronisation CI reliée à une horloge H centrale du module, et ont pour fonction de prendre l'état de leur entrée D, qui est alors disponible sur la sortie Q, à l'apparition du signal d'horloge.

Le module d'émission ainsi décrit permet la mise en oeuvre du procédé selon l'invention de la façon suivante : le bloc E réalise la détection de la valeur binaire choisie pour porter l'information de voie d'ordre, en fonction de la valeur de $S_{n-1}$. Le bloc A réalise la transformation du codage binaire en un codage ternaire selon la loi de codage qui permet de choisir entre les quatre alphabets possibles en fonction de la valeur de la somme numérique $S_{n-1}$, selon le premier tableau ci-dessus. Ce bloc permet l'émission d'une information exprimée selon le codage ternaire tel que modifié par l'ordre V fourni par le bloc E. .

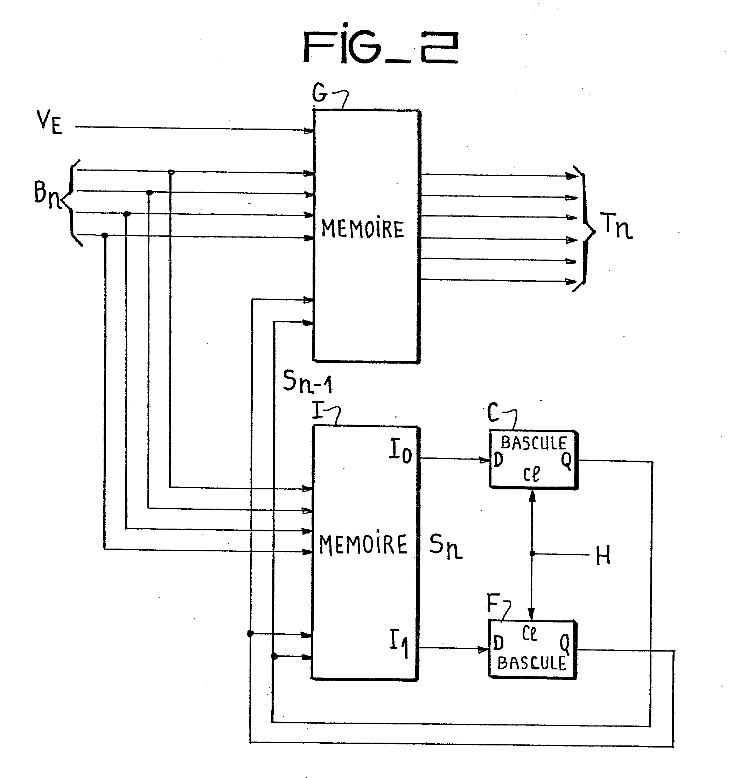

La figure 2 représente un deuxième mode de réalisation du module d'émission selon l'invention. Ce module comporte un bloc G, réalisé à l'aide d'un circuit logique câblé ou, plus simplement, d'une mémoire, par exemple du type ROM ; il réalise simultanément les fonctions des blocs A et E de la figure 1, c'est-à-dire qu'il reçoit le mot binaire $B_n$ ainsi que la somme $S_{n-1}$ et la voie d'ordre $V_E$ et fournit, en fonction du premier tableau ci-dessus tel que modifié par le second tableau, directement le mot ternaire $T_n$ exprimé sous forme binaire sur six bits.

Le calcul de la somme numérique $S_n$ à partir de la somme $S_{n-1}$ et de la somme $S_t$ du mot $T_n$ peut être soit réalisée comme montré sur la figure 1, c'est-à-dire à partir de $S_{n-1}$ et de $S_t$ par un additionneur, soit comme représenté sur la figure 2 par un bloc I, constitué par un circuit logique câblé ou une mémoire, fournissant à partir de $S_{n-1}$ et de $B_n$ la nouvelle valeur $S_n$ sur deux sorties $I_0$ et $I_1$ qui alimentent, comme précédemment, les bascules C et F qui maintiennent disponible sur leur sortie la valeur de la somme numérique courante. Ce mode de réalisation a l'avantage d'éviter l'élaboration de $S_t$ et d'éviter l'utilisation d'un additionneur.

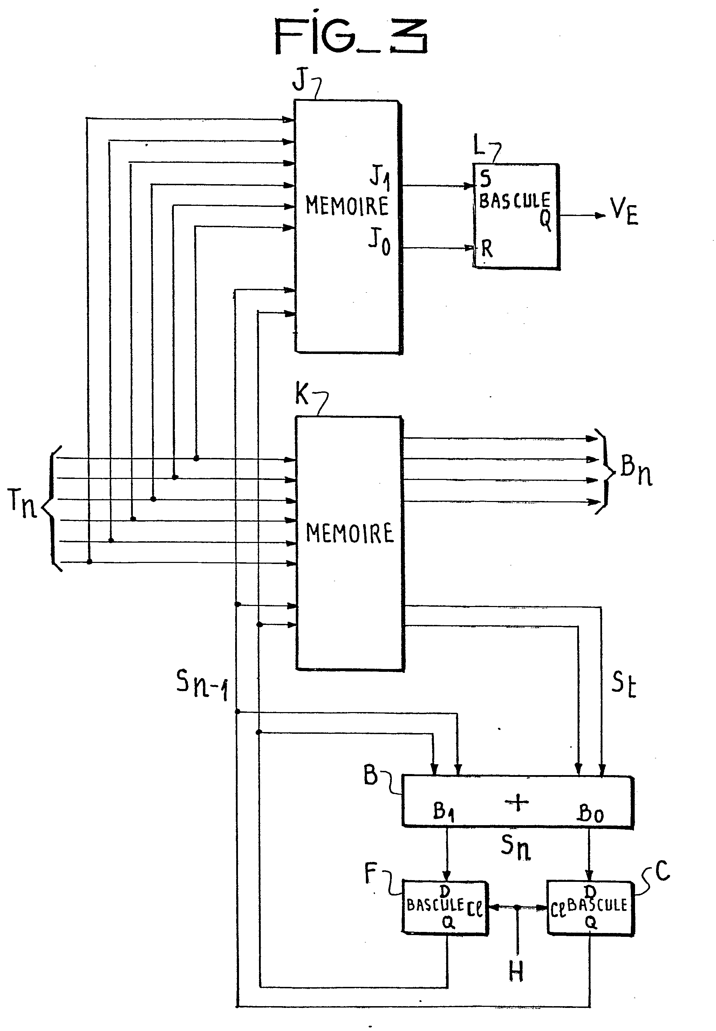

La figure 3 représente un mode de réalisation du module de réception du système de transmission selon l'invention.

Ce module comporte des moyens de transcodage K, constitués par exemple par une mémoire ou un circuit logique câblé, recevant le mot ternaire $T_n$, transmis de préférence en représentation binaire sur six bits, et le convertissant en un mot binaire $B_n$, exprimé sur quatre bits. Ce bloc K fournit également, sur deux bits, la valeur de la somme numérique du mot $T_n$ considéré, notée $S_t$.

Le module comporte encore des moyens d'élaboration de la somme $S_n$ à partir des valeurs $S_{n-1}$ et $S_t$. Ces moyens peuvent être constitués de façon analogue à ceux de la figure 1, comme représenté sur la figure 3, par l'additionneur B recevant les deux bits de $S_{n-1}$ et deux bits de $S_t$ et relié par ses sorties $B_0$ et $B_1$ respectivement aux deux bascules C et F, qui fournissent la valeur de $S_n$. Ces moyens d'élaboration de $S_n$ peuvent également être réalisés de façon analogue à ce qui est représenté sur la figure 2, c'est-à-dire par un bloc (I) constitué par un circuit logique câblé ou une mémoire, permettant d'éviter l'étape d'élaboration de $S_t$ et l'utilisation d'un additionneur.

Le module de réception comporte encore des moyens de détection de la voie d'ordre, recevant le mot ternaire $T_n$ et la somme numérique $S_{n-1}$. Ces moyens comportent un bloc J, constitué par exemple par un circuit logique câblé ou une mémoire, fournissant une information sur une première sortie notée $J_0$ lorsque la voie d'ordre est nulle, et fournissant une information sur une deuxième sortie notée $J_1$ lorsque la voie d'ordre est égale à 1. Ces deux sorties sont reliées à une bascule du type RS, référencée L, qui fournit sur sa sortie l'information de voie d'ordre égale à 0 ou 1.

Les éléments J et K peuvent être réunis en un seul circuit recevant les informations $T_n$ et $S_{n-1}$ et fournissant $J_0$, $J_1$ et $B_n$.

Le module de réception ainsi décrit permet la mise en oeuvre du procédé selon l'invention de la façon suivante :

L'information reçue ($T_n$) exprimée en ternaire est transformée en binaire ($B_n$) et ce, indépendamment de l'existence d'une information de voie d'ordre, ce qui montre que la transmission de la voie d'ordre n'interfère pas avec l'information à transmettre ; la détection de la voie d'ordre se fait par la détection des modifications que subit la loi de codage à partir du mot ternaire $T_n$ (ici : reconnaissance de la valeur 1000) et en fonction de la valeur de $S_{n-1}$ (ici : - 1 ou 0), qui fournit d'après le deuxième tableau ci-dessus la valeur de la voie d'ordre.

Afin de limiter les erreurs sur la voie d'ordre, il est nécessaire que la rapidité de modulation (RMO) de la voie d'ordre, soit assez grande devant la probabilité d'apparition des mots prévus pour porter l'information de voie d'ordre. La grandeur RMO est égale à la rapidité de modulation du système (RMS) divisée par M, M étant le nombre moyen de mots séparant deux mots prévus pour émettre la voie d'ordre. Cela conduit au choix du nombre de mots susceptible de porter l'information de voie d'ordre, en fonction de RMS et du taux d'erreur admis.

La description faite ci-dessus l'est bien entendu à titre d'exemple non limitatif et différentes variantes sont possibles dans le cadre de l'invention. C'est ainsi par exemple que l'altération de la loi de codage peut être réalisée pour un seul mot binaire mais pour toutes les valeurs de la somme numérique, le mot binaire étant alors par exemple traduit par un mot ternaire prenant une valeur normalement interdite (par exemple 000 dans la table de codage 4B/3T donnée précédemment) lorsque l'information de voie d'ordre est égale à 1. De la même manière, rentrent dans le cadre de l'invention des procédés et systèmes de transmission permettant la transmission d'une voie d'ordre par altération de la loi de codage lorsque le transcodage utilisé est différent de l'exemple 4B/3T précisément décrit.

11

# REVENDICATIONS

1. Procédé de transcodage d'une information à transmettre sur une voie de transmission et exprimée selon un premier code, comportant une phase de transformation du premier codage en un second codage par le choix d'un parmi plusieurs alphabets susceptibles d'assurer une telle transformation, ce choix étant effectué en fonction de la valeur de la somme numérique, selon une loi dite loi de codage et telle que la valeur de cette somme numérique soit minimisée ;

le procédé étant caractérisé par le fait qu'il comporte en outre les étapes suivantes :

- la détection d'au moins une valeur possible de l'information à transmettre, pour laquelle la loi de codage est altérée en fonction d'une information supplémentaire à transmettre dite voie d'ordre ;

- l'émission à une extrémité de la voie de transmission de l'information exprimée selon le second codage et telle qu'altérée par la voie d'ordre ;

- la transformation de l'information reçue à l'autre extrémité de la voie de transmission en une information exprimée selon le premier codage ;

- la détection de la voie d'ordre par détection des altérations de la loi de codage.

2. Procédé selon la revendication 1, caractérisé par le fait que le premier code est un code binaire et le second code un code ternaire.

3. Procédé selon l'une des revendications précédentes, caractérisé par le fait que l'information exprimée selon l'un ou l'autre code est organisée en mots comprenant un premier nombre déterminé de caractères pour le premier code et un second nombre déterminé de caractères pour le second code, la somme numérique étant élaborée à la fin de chaque mot.

4. Procédé selon l'une des revendications précédentes, caractérisé par le fait que l'altération de la loi de codage est réalisée pour l'une des valeurs possibles d'un mot du premier code, lorsque la somme numérique prend au moins deux valeurs, ces dernières étant choisies parmi les plus faibles des valeurs possibles.

5. Module d'émission d'un système de transmission assurant la mise en oeuvre du procédé selon l'une des revendications précédentes, caractérisé par le fait qu'il comporte :

- des moyens de détection (E, G) d'au moins une valeur possible de l'information à transmettre, exprimée selon le premier codage ($B_n$), pour laquelle la loi de codage est altérée, recevant la voie d'ordre ($V_E$) et fournissant un signal de modification (V) de cette loi ;

- des moyens d'élaboration (B, I) de la somme numérique ($S_n$) ;

- des moyens de transcodage (A, G), recevant l'information à transmettre, la somme numérique ($S_{n-1}$) et le signal de modification (V), fournissant une information à émettre ($T_n$), exprimée selon le premier codage.

6. Module d'émission selon la revendication 5, caractérisé par le fait que les moyens de détection et les moyens de transcodage sont réalisés chacun par une mémoire (E, A).

7. Module d'émission selon la revendication 5, caractérisé par le fait que les moyens de détection et les moyens de transcodage sont réalisés par une même mémoire (G), recevant la voie d'ordre ($V_E$), la somme numérique ($S_{n-1}$) et l'information exprimée selon le premier codage ($B_n$), et fournissant l'information ($T_n$) exprimée selon le second codage et telle qu'altérée par la voie d'ordre.

8. Module d'émission selon les revendications 3 et 5, caractérisé par le fait que l'information à transmettre étant constituée par un mot de rang n dans un message comportant une pluralité de mots, les moyens d'élaboration de la somme numérique comportent un additionneur (B), recevant la somme numérique des (n-1) mots précédents et la somme numérique du $n^{\text{ième}}$ mot, fournie par les moyens de transcodage, fournissant la somme numérique des n mots.

9. Module d'émission selon les revendications 3 et 5, caractérisé par le fait que, l'information à transmettre étant constituée par un mot de rang $n$ dans un message comportant une pluralité de mots, les moyens d'élaboration de la somme numérique comportent une mémoire (I), recevant la somme numérique des $(n-1)$ mots précédents et le $n^{ième}$ mot, et fournissant la somme numérique des $n$ mots.

10. Module de réception d'un système de transmission assurant la mise en oeuvre du procédé selon l'une des revendications 1 à 4, caractérisé par le fait qu'il comporte :

- des moyens de transcodage (K), recevant l'information transmise ($T_n$) et fournissant une information ($B_n$) exprimée selon le premier codage ;

- des moyens d'élaboration (B) de la somme numérique ($S_n$) ;

- des moyens de détection (J) des altérations de la loi de codage, recevant l'information transmise et la somme numérique, et fournissant la voie d'ordre.

11. Module de réception selon la revendication 10, caractérisé par le fait que les moyens de transcodage et les moyens de détection sont chacun réalisés par une mémoire (J, K).

12. Module de réception selon les revendications 3 et 10, caractérisé par le fait que l'information à transmettre étant constituée par un mot de rang $n$ dans un message comportant une pluralité de mots, les moyens d'élaboration de la somme numérique comportent un additionneur (B), recevant la somme numérique des $(n-1)$ mots précédents et la somme numérique du $n^{ième}$ mot, fournie par les moyens de transcodage, fournissant la somme numérique des $n$ mots.

13. Module de réception selon les revendications 3 et 10, caractérisé par le fait que, l'information à transmettre étant constituée par un mot de rang $n$ dans un message comportant une pluralité de mots, les moyens d'élaboration de la somme numérique comportent une mémoire (I), recevant la somme numérique des $(n-1)$ mots précédents et le $n^{ième}$ mot, et fournissant la somme numérique des $n$ mots.

FIG_1

0045680

1/3

# FIG_2

$V_E$

$B_n$

G

MEMOIRE

$T_n$

$S_{n-1}$

I

$I_0$

MEMOIRE $S_n$

$I_1$

C

BASCULE

D Q

Cℓ

F

D Cℓ Q

BASCULE

H

FIG_3

**Office européen des brevets**

**RAPPORT DE RECHERCHE EUROPEENNE**

EP 81 40 1183

| | DOCUMENTS CONSIDERES COMME PERTINENTS | | CLASSEMENT DE LA DEMANDE (Int Cl³) |
|---|---|---|---|
| Catégorie | Citation du document avec indication, en cas de besoin, des parties pertinentes | Revendica-tion concernée | |
| | <u>US - A - 4 092 595</u> (WEIR et al.)<br>* Colonne 1, lignes 30-55; co-lonne 3, lignes 27-66; colonne 4, ligne 63 - colonne 5, ligne 15, ligne 60 - colonne 6, première ligne *<br><br>--<br><br>PHILIPS TELECOMMUNICATION REVIEW, vol. 37, no. 3, août 1979 Hilversum, NL<br>W.G. BAX et al.: "140 Mb/s coaxial transmission system 8TR609", pages 144-160<br>* Page 148, lignes 19-36; page 149, lignes 1-3; page 151, tableau 3 *<br><br>---- | 1,2,6, 11<br><br><br><br><br><br><br>1-3 | H 04 L 25/49 |

**DOMAINES TECHNIQUES RECHERCHES (Int Cl³)**

H 04 L 25/49
5/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cite pour d'autres raisons
&: membre de la même famille. document correspondant

Le présent rapport de recherche a ete etabli pour toutes les revendications

| Lieu de la recherche | Date d'achèvement de la recherche | Examinateur |
|---|---|---|
| La Haye | 04-11-1981 | HOLPER |

OEB Form 1503.1   06.78